# EUROPÄISCHE PATENTSCHRIFT

(11) **EP 0 961 654 B1**
(45) Veröffentlichungstag und Bekanntmachung des Hinweises auf die Patenterteilung: **04.12.2002**
(21) Anmeldenummer: 98908108.8
(22) Anmeldetag: 23.02.1998
(51) Int. Cl.: B01L 3/02, B41J 13/32, G01N 33/52, G01N 33/53

(54) **SYSTEM ZUR HERSTELLUNG DIAGNOSTISCHER VIELFACH-TESTELEMENTE**
SYSTEM FOR PRODUCING MULTIPLE DIAGNOSTIC TEST ELEMENTS
SYSTEME DE FABRICATION D'ELEMENTS MULTIPLES POUR TESTS DE DIAGNOSTIC

(30) Priorität: 24.02.1997 DE 19707204
(43) Veröffentlichungstag der Anmeldung: 08.12.1999
(73) Patentinhaber: Roche Diagnostics GmbH, 68298 Mannheim (DE)
(72) Erfinder: EICHENLAUB, Udo, D-82392 Habach (DE); MASCH, Martin, D-81379 München (DE)
(86) Internationale Anmeldenummer: EP9801022
(87) Internationale Veröffentlichungsnummer: WO98036833

(56) Entgegenhaltungen:
- EP-A- 0 119 573
- EP-A- 0 353 592
- WO-A-89/10192
- WO-A-95/35505
- WO-A-97/44134
- US-A- 5 424 220
- PATENT ABSTRACTS OF JAPAN vol. 013, no. 217 (M-828), 22.Mai 1989 -& JP 01 036449 A (SHOWA KIKAI KOGYO KK), 7.Februar 1989,

## Beschreibung

Die vorliegende Erfindung betrifft ein System zur Herstellung diagnostischer Vielfach-Testelemente beinhaltend,
- einen Träger mit einem Analysebereich zur Aufbringung diagnostischer Teststellen sowie mit einer oder mehreren Anschlagskanten pro Raumrichtung zur Positionierung des Trägers.
- eine erste Aufnahmeeinheit, in die der Träger eingebracht und in der er über die ein oder mehreren Anschlagskanten positioniert wird,
- einen ersten Druckkopf, der oberhalb der Aufnahmeeinheit angeordnet ist und der zur Abgabe von Fluidtropfen einer ersten Flüssigkeit auf den Analysebereich des Trägers dient,
- eine erste Positioniereinheit, die die erste Aufnahmeeinheit lateral verschiebt und positioniert,
- eine zweite Aufnahmeeinheit, in die der Träger eingebracht und in der er über die ein oder mehreren Anschlagskanten positioniert wird,
- einen zweiten Druckkopf, der oberhalb der zweiten Aufnahmeeinheit angeordnet ist und der zur Abgabe von Fluidtropfen einer zweiten Flüssigkeit auf den Analysebereich des Trägers dient,
- eine zweite Positioniereinheit, die die zweite Aufnahmeeinheit lateral verschiebt und positioniert,
- eine Transporteinheit, die den Träger in die Aufnahmeeinheiten transportiert,
- eine Steuereinheit, die die Transporteinheit, die Aufnahmeeinheiten und die Positioniereinheiten sowie die Fluidabgabe aus den Druckköpfen steuert.

Die vorliegende Erfindung betrifft weiterhin diagnostische Vielfach-Testelemente, bei denen eine Vielzahl von Teststellen besonders exakt in einem vorgegebenen Raster angeordnet sind sowie ein Hersteilverfahren für derartige Testelemente und ein Analyseverfahren unter Verwendung von Vielfach-Testelemente.

Im Stand der Technik sind bereits seit einiger Zeit Testelemente bekannt, bei denen auf einen Träger verschiedene Reagenzien aufgebracht sind. In dem deutschen Patent DE 27 27 347 wird beispielsweise ein Indikator beschrieben, bei dem auf einem Träger zwei oder mehr Substanzen auf Zonen der Trägeroberfläche aufgebracht sind, die einen bestimmten Abstand voneinander haben. Zum Aufbringen der Reagenzien auf die Oberfläche werden Drucktechniken, wie z. B. Siebdruck oder elektrostatisches Drucken und auch das sogenannte Tintenspritzdrucken genannt. In dem US-Patent 4,216,245 wird ebenfalls ein Verfahren zur Herstellung von Reagenzträgern beschrieben, bei dem zwei oder mehr Reagenzien in nicht überlappende Bereiche der Oberfläche aufgebracht werden. In den vorgenannten Dokumenten wird diese Vorgehensweise gewählt, um unerwünschte Interaktionen der Reagenzien miteinander zu vermeiden. In den US-Patenten 5,378,638 und 4,591,570 werden hingegen Testelemente beschrieben, die für immunologische Nachweise geeignet sind. In US 4,591,570 wird ein Verfahren beschrieben, bei dem verschiedene Lösungen von Antikörpern mit einer Pipette manuell auf den Träger aufgebracht werden. Der Durchmesser der beschichteten Oberflächenbereiche (Spots) liegt zwischen 0,25 und 1 mm. In der US 5,338,688 wird eine Apparatur zur automatisierten Herstellung von Trägern mit einer Vielzahl kleiner Teststellen beschrieben. Der zu beschichtende Träger befindet sich auf einen Positionierungstisch, der lateral bewegt werden kann und ein einzelner Druckkopf zur Abgabe von Fluidtropfen befindet sich oberhalb des Trägers. In diesem Dokument wird darauf hingewiesen, daß es möglich ist, Muster aus verschiedenartigen Flüssigkeiten zu erzeugen, die alternierend angeordnet sind. Es wird jedoch nicht dargelegt, wie die Erzeugung eines derartigen Musters in der Praxis erfolgen kann.

Aus dem Dokument EP A 0 119573 ist ein Dispenser für Mikrotröpfchen beschrieben, wie er zur Durchführung von biochemischen Analysen geeignet ist.

In dem US Patent 5,424,220 ist ein Analyseelement für heterogene Immunoassays beschrieben, bei dem Zonen für Reaktionen und Detektionen eng benachbart angeordnet sind. Als mögliches Herstellverfahren für ein derartiges Testelement wird die Inkjettechnik genannt.

Das Dokument EP A 0 353 592 beschreibt ein Testelement mit einer Vielzahl von nebeneinander, jedoch voneinander getrennten Testzonen. Zur Durchführung von Analysen werden diese Testelemente aus einem Reservoir mit einer Transportvorrichtung in eine Position verbracht, in der Probe und Reagenzien zugegeben werden, um eine Analyse durchzuführen.

Aufgabe der vorliegenden Erfindung war es, eine Vorrichtung und ein Verfahren zur Herstellung von Vielfach-Testelementen vorzuschlagen, mit dem Testelemente erzeugt werden können, die besonders kleine Testzonen in einer hochgenauen vorgegebenen Anordnung aufweisen. Insbesondere war es Aufgabe der vorliegenden Erfindung derartig präzise Testelemente bereitzustellen, bei denen die Teststellen voneinander verschiedene Zusammensetzungen aufweisen. Weiterhin war es Aufgabe der vorliegenden Erfindung, eine Vorrichtung zur Herstellung von Testelementen und ein geeignetes Verfahren vorzuschlagen, mit dem erfindungsgemäße Testelemente zuverlässig und schnell produziert werden können.

Die vorliegende Erfindung hat die genannten Aufgaben durch Bereitstellung eines Systems gemäß Anspruch 1 gelöst. Mit diesem System können Vielfach-Testelemente hergestellt werden, die ein sehr genaues Muster kleiner Testzonen besitzen.

Vielfach-Testelemente, die mit einem Herstellungssystem der vorliegenden Erfindung erzeugt werden, besitzen einen Träger, auf dem sich ein Analysebereich befindet. In dem Analysebereich ist eine Vielzahl im wesentlichen kreisförmiger Teststellen in einem vorgegebenen Raster aufgebracht. Der Durchmesser der einzelnen Teststellen ist vorzugsweise kleiner als 350 µm und die Mittelpunkte der Teststellen weichen um weniger als 40 µm von dem vorgegebenen Raster ab. Eine derart genaue Anordnung der Teststellen ist im Stand der Technik nicht bekannt. Bei Verwendung von Inkjet-Druckköpfen in konventionellen Druckern können Buchstaben oder dergleichen ebenfalls durch ein Muster sehr genau angeordneter Einzelpunkte erzeugt werden. Bei der vorliegenden Erfindung stellt sich jedoch das Problem, daß die Testzonen der Vielfach-Testelemente nicht mit einem einzigen Druckkopf aufgebracht werden können, sondern, daß mehrere Druckköpfe, gefüllt mit unterschiedlichen Druckflüssigkeiten erforderlich sind. Im Stand der Technik sind Farbdrucker bekannt, bei denen mit mehreren Druckköpfen oder einem Druckkopf mit mehreren Kammern unterschiedliche Flüssigkeiten aufgebracht werden. Bei derartigen Farbdruckern findet sowohl eine Bewegung des Papiers als auch eine Bewegung der Druckköpfe statt. Zur Herstellung von sehr präzisen Testelementen ist eine derartige Anordnung wenig geeignet, da weder die absoluten, noch die relativen Positioniergenauigkeiten ausreichend sind. Außerdem ist es mit den Farbdruckern des Standes der Technik nicht möglich, die für die vorliegende Erfindung erforderliche hohe Druckdichte, bestehend aus unterschiedlichen voneinander getrennten Teststellen, zu erzielen. Es wurde gefunden, daß die Positionierungenauigkeiten vor allem dadurch hervorgerufen werden, daß die Druckköpfe während des Druckprozesses bewegt werden. Weitere Nachteile von Farbdruckern liegen in der Anwendung eines relativ großen Abstandes zwischen Austrittsdüse des Druckkopfes und bedrucktem Material. Die vorliegende Erfindung offenbart ein verbessertes Verfahren und System zur Herstellung exakter Testelemente mit unterschiedlichen Teststellen mit dem die Nachteile des Stand der Technik vermieden werden können.

Bei Produktion der Vielfach-Testelemente ist dem Hersteller das gewünschte Raster vorbekannt, so daß eine Abweichung der Teststellen von dem Raster und das Ausmaß der Abweichung durch eine mikroskopische Auswertung oder dergleichen auf einfache Weise möglich ist. Die Abweichung vom Raster kann jedoch auch festgestellt werden, wenn das vorgegebene Raster nicht vorbekannt ist, da es sich bei in der Praxis verwendeten Rastern um streng geometrische Anordnungen, wie Quadrate, Rechtecke, Waben oder dergleichen handelt. Bei den genannten Rastern treten stets Reihen von Teststellen auf. Zur Feststellung von Abweichungen vom Raster können daher die Mittelpunkte von Teststellen, die sich in einer Reihe befinden, durch eine Ausgleichsgerade miteinander verbunden werden. Die Abweichung vom Raster ergibt sich auf einfache Weise als Abstand der einzelnen Teststellenmittelpunkte von der Ausgleichsgeraden. Bei dieser Abstandsdefinition wird vorausgesetzt, daß sich in den betrachteten Reihen verschiedenartige Teststellen befinden. Es ist nämlich technisch relativ einfach, die erfindungsgemäße Präzision für Reihen gleichartiger Teststellen zu erzielen, deren Herstellung mit ein und demselben Druckkopf möglich ist.

Der Analysebereich erfindungsgemäßer Vielfach-Testelemente ist vorzugsweise planar und besitzt eine Unebenheit, die kleiner als 100 µm, besonders bevorzugt kleiner als 10 µm ist. Der Analysebereich besteht vorzugsweise aus einem Material, in das Flüssigkeiten nicht oder nur sehr wenig eindringen können. Geeignete Materialien sind insbesondere Kunststoffe, von denen sich Polystyrol als besonders günstig erwiesen hat. Der Analysebereich kann jedoch auch aus Gläsern, Metallen oder Silizium bestehen, die eine geeignete Oberflächenbeschaffenheit aufweisen. Der Analysebereich, auf den die Teststellen aufgebracht werden, ist vorzugsweise hydrophob, um ein Verlaufen aufgedruckter Flüssigkeitstropfen zu vermeiden. Durch Verwendung einer hydrophoben Oberfläche für den Analysebereich, darauf abgestimmter Druckflüssigkeiten zur Erzeugung der Teststellen und durch geeignete Verfahren zur Aufbringung der Teststellen kann gewährleistet werden, daß die Teststellen eine definierte Größe und Form besitzen.

Der Analysebereich sollte auch eine ausreichend homogene Oberfläche besitzen, die nur wenige Fehlstellen und geringe Unebenheiten aufweisen. Die Fehlstellen der Oberfläche sollten so klein sein, daß die längste Abmessung der Fehlstelle unterhalb 10 µm liegt und die Unebenheit der Oberfläche vorzugsweise kleiner oder gleich 10 µm ist.

Eine erfindungsgemäß bevorzugte Verwendung der Vielfach-Testelemente ist im Rahmen einer Analyse unter Verwendung von Fluoreszenzlicht. Hierzu hat es sich als vorteilhaft erwiesen, zumindest für den Analysebereich, besser jedoch für den Gesamtträger, Materialien zu wählen, die einerseits nicht durch Fluoreszenzstrahlung zur Lichtemission angeregt werden und andererseits die verwendete Fluoreszenzstrahlung nicht reflektieren. Derartige Materialien können in geeigneter Weise durch die Zumischung von Ruß zu Kunststoffen gewonnen werden.

Erfindungsgemäß können Vielfach-Testelemente realisiert werden, die die Form eines Streifens oder dergleichen aufweisen und die in eine Probelösung eingetaucht werden oder auf die Probelösung aufgegeben wird. Es hat sich jedoch gezeigt, daß die erfindungsgemäßen Vielfach-Testelemente besonders gut für Nachweismethoden eingesetzt werden können, bei denen die Teststellen zusammen mit Probe inkubiert werden. Dies sind insbesondere immunologische Testverfahren, bei denen eine Antigen-Antikörper-Reaktion stattfindet. Um eine derartige Inkubation mit sehr geringen Probemengen durchführen zu können, wird der Analysebereich des Vielfach-Testelementes mit einem Rand umgeben, so daß Rand und Analysebereich zusammen einen Napf bilden. In diesen Napf wird die zu untersuchende Probeflüssigkeit und gegebenenfalls weitere Flüssigkeiten, wie z. B. Reagenzien, hineingegeben. Ein derartiges Vielfach-Testelement ermöglicht die Durchführung einer Vielzahl analytischer Tests mit Probemengen von wenigen Mikrolitern. Die Höhe des genannten Randes wird an die durch den Napf aufzunehmende Flüssigkeitsmenge angepaßt. Typischerweise weist der Rand eine Höhe von etwa 2 mm auf.

Es hat sich gezeigt, daß es für die Herstellung eines erfindungsgemäßen Vielfach-Testelementes sowie für die Durchführung von analytischen Tests vorteilhaft ist, wenn der Träger des Testelements eine zum Analysebereich parallel verlaufene Basisfläche aufweist, die zur vertikalen Positionierung des Trägers dient. Insbesondere ist es vorteilhaft, wenn die zur Positionierung verwendete Basisfläche auf der gleichen Seite des Trägers angeordnet ist wie der Analysebereich. Erfindungsgemäß hat es sich weiterhin gezeigt, daß eine besonders exakte Positionierung und günstige Herstellungsweise dann gegeben ist, wenn der Träger von der Unterseite in eine Aufnahmeeinheit eingeschoben wird, in der die Auftragung von Teststellen erfolgt. Daher befindet sich der als Anschlag verwendete Bereich der Basisfläche vorzugsweise auf der Oberfläche des Trägers, wo auch der Analysebereich angeordnet ist.

Für die Herstellung und Verwendung der Vielfach-Testelemente ist es weiterhin günstig, wenn an der Basisfläche ein oder mehrere Stege angebracht sind, die im wesentlichen senkrecht zur Basisfläche verlaufen und die Anschlagskanten für zwei Raumrichtungen bereitstellen. Aus herstellungstechnischen Gründen hat es sich als vorteilhaft erwiesen, wenn die Stege an der Unterseite der Basisfläche, d. h. an der dem Analysebereich abgewandten Seite des Trägers befinden. Die Stege dienen zur Positionierung der Testelemente in der Ebene (laterale Positionierung). Als vorteilhaft hat es sich erwiesen, wenn das Testelement Paare von Stegen besitzt, die sich gegenüberstehen, so daß an einem Steg eines solchen Paares ein Hebel zur Positionierung angreifen kann und der zweite Steg des Paares gegen einen Anschlag in einer Aufnahmeeinheit gedrückt wird. Weiterhin haben sich Stege als günstig erwiesen, die bei Aufsicht auf die Basisfläche des Trägers eine U-form aufweisen. Durch diese Art von Stegen sind die erfindungsgemäßen Vielfach-Testelemente einerseits stapelbar, andererseits können sie im gestapelten Zustand horizontal gegeneinander verschoben werden, wenn zwei U-förmige Stege verwendet werden, zwischen denen ein Abstand besteht, der größer ist als der Durchmesser des Napfes.

Ein System zur Herstellung von Vielfach-Testelementen weist mindestens zwei Aufnahmeeinheiten auf, in die die Träger bzw. die Vielfach-Testelemente eingebracht werden können. Die Aufnahmeeinheit besitzt mehrere Anschlagskanten, gegen die die Anschlagskanten des Trägers gedrückt werden. In der Regel wird mit drei verschiedenen Typen von Anschlagskanten gearbeitet. Zum einen wird der Träger mit seiner Basisfläche gegen ein oder mehrere Anschlagskanten gefahren, die eine Positionierung in der Vertikale vornehmen. Vorzugsweise wird der Träger von unten in die Aufnahmeeinheit eingebracht und die Aufnahmeeinheit besitzt Anschläge, gegen deren Unterseite die Oberseite des Trägers positioniert wird. Weiterhin besitzt eine Aufnahmeeinheit Anschlagskanten für die zwei lateralen Raumrichtungen, gegen die der Träger positioniert wird.

Oberhalb der Aufnahmeeinheiten sind Druckköpfe angeordnet, aus denen Flüssigkeitstropfen auf die Analysenbereiche der Träger aufgegeben werden. Als Druckköpfe sind beispielsweise die in US 5,338,688 und EP-A-0 268 237 beschriebenen Druckköpfe für Flüssigkeiten geeignet. Es sind jedoch auch andere im Stand der Technik bekannte Druckköpfe geeignet, wie sie beispielsweise für Inkjet- oder Bubbeljetdrucker eingesetzt werden. Aufgrund der weiten Verbreitung, die derartige Druckköpfe gefunden haben, wird keine detailliertere Beschreibung gegeben, sondern lediglich vollinhaltlich auf die bereits genannten Patentdokumente verwiesen.

Erfindungsgemäß wird an die verwendeten Druckköpfe die Forderung gestellt, daß sie definierte Flüssigkeitsmengen in der Größenordnung von 1000 pl oder darunter in reproduzierbarer Weise abgeben können. Dabei ist es erforderlich, daß sowohl das Volumen zwischen aufeinanderfolgenden Druckvorgängen konstant gehalten werden kann als auch die Geschwindigkeit, mit der die Tropfen auf den Analysebereich auftreffen. Bei Gleichhaltung der genannten Parameter kann sichergestellt werden, daß die Form und Größe der einzelnen Teststellen gleichbleibend ist und somit ein regelmäßiges Raster erhalten wird. Die gestellten Forderungen lassen sich beispielsweise mit einem Drucker des Typs ADK-201b Firma Microdrop in Hamburg und einer geeigneten elektrischen Ansteuerung (MD-E-201 der gleichen Firma) erreichen. Eine ebenfalls geeignete Druckkopfansteuerung wird auch in der EP-A-0 268 237 beschrieben. Vorteilhaft werden die Druckköpfe, die zu einem Herstellungssystem gehören, so eingestellt, daß sie untereinander gleiche Flüssigkeitsmenge mit gleicher Geschwindigkeit abgeben. Hierdurch werden im Regelfall auch für unterschiedliche Druckflüssigkeiten gleich große Teststellen erhalten. Bei stark unterschiedlichen Viskositäten oder Oberflächenspannungen der einzelnen Druckflüssigkeiten kann es erforderlich sein, die Ansteuerung der Druckköpfe experimentell so einzustellen, daß für verschiedene Druckflüssigkeiten gleich große Teststellen erhalten werden.

Die Druckköpfe sind im Herstellungssystem festpositioniert und werden nicht verfahren. Es hat sich herausgestellt, daß dies für die Genauigkeit und Reproduzierbarkeit des Herstellverfahrens von entscheidender Bedeutung ist. Es hat sich als wesentlich verlässlicher erwiesen, einen zu bedruckenden Träger unter jedem der Druckköpfe neu zu positionieren, als die Druckköpfe ihrerseits über den Träger zu bewegen und so zu positioniern. Die Druckköpfe des erfindungsgemäßen Herstellungssystems werden zwar zur Abgabe von Flüssigkeitstropfen nicht verfahren, jedoch kann jeder der Druckköpfe justiert werden, so daß eine Korrektur der lateralen Druckkopfposition vorgenommen werden kann, wenn sich herausstellt, daß die Teststellen, die von einem bestimmten Druckkopf erzeugt wurden, zu stark vom vorgegebenen Raster abweichen.

Eine derartige Justierung der Druckköpfe wird durch eine Qualitätssicherungsvorrichtung vorgenommen, die ein optionaler Bestandteil des Herstellsystems ist. Eine Qualitätssicherungsvorrichtung nimmt eine optische Untersuchung der Vielfach-Test-elemente vor und überprüft, ob die Teststellen eines Analysebereiches Abweichungen von einem vorgegebenen Raster aufweisen. Abweichungen von diesem Raster werden in Signale umgewandelt, die eine Justierung eines oder mehrerer Druckköpfe vornehmen. Die optische Untersuchung der Testelemente kann über CCD-Kameras vorgenommen werden, die die Einhaltung eines vorgegebenen Rasters über eine Bildverarbeitungssoftware kontrollieren. Weiterhin ist es möglich, Druckflüssigkeiten einzusetzen, die ein oder mehrere fluoreszierende Farbstoffe enthalten und die Position der Teststellen über ein Fluorenzenzmikroskop oder einem Fluorenzenzscanner zu ermitteln.

Zur Herstellung erfindungsgemäßer Vielfach-Testelemente hat es sich als vorteilhaft erwiesen, bestimmte Verfahrensparameter zum Drucken einzuhalten. Die Fluidtropfen, die aus den Druckköpfen austreten, sollten eine Geschwindigkeit von weniger als 5 m/s, vorzugsweise weniger als 2 m/s, aufweisen. Es hat sich gezeigt, daß diese Geschwindigkeiten optimal sind, um gleichmäßige Teststellen zu erzeugen und ein Zerspritzen der Tropfen auf der Analysefläche zu vermeiden. Bei den genannten Geschwindigkeiten der Fluidtropfen ist es vorteilhaft, den Abstand der Druckkopfdüsen vom Analysebereich unter 2 mm oder besser noch unter 500 µm abzusenken, um den Druckvorgang möglichst unabhängig von Störungen der Bahn des Tropfens während des Fluges zu machen und nun mit niedrigen Fluggeschwindigkeiten arbeiten zu können. Das Volumen der einzelnen Fluidtropfen, die auf den Analysebereich aufgebracht werden, ist vorzugsweise kleiner als 1000 pl, um ausreichend kleine Teststellen zu erzeugen. Es ist außerdem günstig, wenn der Analysebereich hydrophob ist, um ein Zerfließen der aufgebrachten Tropfen zu vermeiden. Die Oberfläche ist vorzugsweise so beschaffen, daß mit einer 20 mM Kaliumphosphatlösung ein Grenzwinkel von mehr als 70° oder noch besser von mehr als 80° erhalten wird.

Aufgrund der sehr kleinen Flüssigkeitsmengen, die bei dem Druckverfahren verwendet werden, findet unter normalen Raumbedingungen eine sehr schnelle Eintrocknung statt. Dieser, auf den ersten Blick günstig erscheinende Umstand, hat sich jedoch als nachteilig erwiesen, wenn immunologische Testelemente hergestellt werden. Es hat sich herausgestellt, daß die verhältnismäßig großen Antigenen- oder Antikörpermoleküle eine ausreichende Zeit benötigen, um sich in geeigneter Weise auf der Oberfläche des Trägers auszurichten. Dies ist insbesondere der Fall, wenn ein Analysebereich verwendet wird, der mit einem Antigen- oder Anitkörper beschichtet ist und die Druckflüssigkeit einen entsprechenden Bindungspartner enthält, an den das Reagenz (in der Regel ebenfalls ein Antigen oder Antikörper) gebunden ist. Diese Ausführungsform der Erfindung hat den Vorteil, daß der Bindungspartner und somit auch das Reagenz fest an die Oberfläche gebunden werden kann. Um den Bindungspartner-Molekülen für ihre Ausrichtung genügend Zeit zu geben, wird der Druckvorgang vorzugsweise in einer Umgebung mit erhöhter relativer Luftfeuchte, vorzugsweise 80 % - 98 %, vorgenommen. Die Kontrolle der Luftfeuchte wird dadurch erzielt, daß das gesamte Herstellungssystem oder Teile des Systems durch ein Gehäuse gegenüber der Umgebung abgeschlossen sind und innerhalb dieses Gehäuses durch gezielte Verdampfung oder Kondensation von Wasser eine vorgegebene Luftfeuchte eingestellt wird.

Ein erfindungsgemäßes Herstellungssystem besitzt weiterhin pro Aufnahmeeinheit ein oder mehrere Positioniereinheiten, die die jeweilige Aufnahmeeinheit lateral verschieben und positionieren. Innerhalb der Aufnahmeeinheit wird ein Träger - wie weiter oben beschrieben - positioniert und gehaltert. Die Auswahl der Positionen innerhalb des Analysebereiches, auf die ein Fluidtropfen aufgegeben werden soll, erfolgt mittels der Positioniereinheit. Hierzu wird die Positioniereinheit von einer Steuereinheit so angesteuert, daß sie die Aufnahmeeinheit in der Lateralen an eine bestimmte Stelle verschiebt. Die Positioniereinheit kann beispielsweise Gewindestangen beinhalten, die in Gewindebohrungen der Aufnahmeeinheit verlaufen und über Schrittmotoren angetrieben werden, die ihrerseits über die Steuereinheit gesteuert werden.

Erfindungsgemäße Vielfach-Testelemente können jeweils eine Teststelle eines bestimmten Reagenzes enthalten oder aber mehrere. Letzteres ist vorteilhaft, um sicherzustellen, daß der Ausfall einer einzelnen Teststelle nicht die Unbrauchbarkeit des gesamten Testelementes zur Folge hat. Andererseits ist es vorteilhaft, mehrere Teststellen einer Sorte zu haben, um eine Mittelung der gewonnenen Analyseresultate vornehmen zu können, wodurch Fehler bei der Durchführung der Analyse oder produktionstechnische Schwankungen der Teststellen ausgeglichen werden.

Besitzt ein Vielfach-Testelement mehrere Teststellen der gleichen Art, so werden diese bevorzugt durch ein und denselben Druckkopf auf das Testelement aufgebracht. Hierzu wird der Träger in eine Aufnahmeeinheit eingebracht und positioniert, die Aufnahmeeinheit durch die zugehörige Positioniereinheit in eine erste Position verfahren und ein Fluidtropfen durch den zugehörigen Druckkopf abgegeben. Darauf wird die Aufnahmeeinheit in eine weitere Position des vorgegebenen Rasters bewegt und ein weiterer Fluidtropfen abgegeben. Das hierbei verwendete Verfahren, bei dem in einem Zeitintervall ein einzelner oder wenige Tropfen nach selektiver Ansteuerung des Druckkopfes abgegeben werden, wird als "Drop on demand"-Verfahren bezeichnet.

Wie bereits weiter oben beschrieben, ist es ein wesentliches Charakteristikum des vorliegenden Herstellungssystems, daß es mehrere Aufnahmeeinheiten besitzt, in die ein und derselbe Träger nacheinander eingebracht und mit Flüssigkeitstropfen bedruckt wird. Für die Herstellung eines Vielfach-Testelementes erfolgt daher ein Transport des Trägers in verschiedene Aufnahmeeinheiten mit einer Transporteinheit.

Als Transporteinheit ist beispielsweise ein Roboter-Arm geeignet, der einen frischen Träger ergreift, in eine erste Aufnahmeeinheit einsetzt, ihn nach dem Druckvorgang entnimmt, in eine zweite Aufnahmeeinheit einsetzt usw.. Es hat sich jedoch als günstiger herausgestellt, eine Transporteinheit zu verwenden, die sowohl eine Fördervorrichtung für einen lateralen Transport als auch eine Hebevorrichtung zum vertikalen Transport der Träger beinhaltet. Die Fördervorrichtung ist vorzugsweise ein Förderband, das unterhalb der Aufnahmeeinheiten verläuft. Weiterhin ist es günstig, kein gewöhnliches Förderband mit einem planaren Transportband zu verwenden, sondern ein Förderband, auf dem sich Halter zur Halterung von Trägern befinden. Es sind beispielsweise Halter möglich, die fest mit dem Transportband verbunden sind. Weiterhin können Halter verwendet werden, die an ihrer Unterseite Zapfen oder dergleichen aufweisen, die in entsprechende Ausnehmungen des Transportbandes eingreifen. Die genannten Halter besitzen vorzugsweise die Form eines Sockels, auf den die Träger aufgesetzt werden. Bei Verwendung von Trägern mit Stegen an der Unterseite ist es günstig, wenn diese Stege an den Seiten des Halters zu liegen kommen und somit ein Herabrutschen der Träger von den Haltern verhindert wird. Die zur Transporteinheit gehörende Hebevorrichtung nimmt eine Anhebung der Träger von dem Förderband in die Aufnahmeeinheit hinein vor. Vorzugsweise besitzt das Herstellungssystem pro Aufnahmeeinheit eine Hebevorrichtung. Eine derartige Hebevorrichtung kann beispielsweise ein Stößel sein, der über einen Motor vertikal aus einer ersten Position, in der sich unterhalb des Trägers befindet, nach oben bewegt wird, wobei er unter den Träger greift und zusammen mit dem Träger in eine zweite Position fährt, in der der Träger gegen den vertikalen Anschlag der Aufnahmeeinheit gedrückt wird. Es ist also möglich, die Hebevorrichtung so einfach zu gestalten, daß nur eine Bewegung in einer Raumrichtung vorgenommen werden muß. Vorteilhaft ist es hierbei, wenn der Träger an zwei gegenüberliegenden Seiten über den Halter, auf dem er sich befindet, übersteht. Bei einer solchen Anordnung kann die Hebevorrichtung direkt von der Unterseite an den Träger herangefahren werden.

Eine Steuereinheit regelt die Bewegung der Transporteinheit, die Halterung bzw. Positionierung der Träger in den Aufnahmeeinheiten, die Bewegung der Positioniereinheiten sowie die Fluidabgabe aus den Druckköpfen. Als Steuereinheit kann beispielsweise ein handelsüblicher Mikroprozessor, der mit geeigneten Interface-Karten ausgerüstet ist, verwendet werden. Die Steuereinheit regelt auf Basis eines gespeicherten Programmes das Verfahren zur Herstellung für diagnostische Vielfach-Testelemente. Ein derartiges Herstellverfahren, das ebenfalls Gegenstand dieser Erfindung ist, beinhaltet die folgenden Schritte:
- Positionierung eines Trägers in einer ersten Aufnahmeeinheit unterhalb eines ersten Druckkopfes,
- Verschieben der ersten Aufnahmeeinheit und des darin positionierten Trägers mit einer Positioniereinheit in eine Position, in der eine erste Stelle des Analysebereichs unterhalb des ersten Druckkopfes positioniert ist,
- Abgabe eines oder mehrere Fluidtropfen aus dem ersten Druckkopf auf die erste Stelle des Analysebereiches,
- Positionierung des Trägers in einer zweiten Aufnahmeeinheit unterhalb eines zweiten Druckkopfes,
- Verschieben der zweiten Aufnahmeeinheit und des darin positionierten Trägers mit einer Positioniereinheit in eine Position, in der eine zweite Stelle des Analysebereiches unterhalb des zweiten Druckkopfes positioniert ist,
- Abgabe eines oder mehrerer Fluidtropfen aus dem zweiten Druckkopf auf die zweite Stelle des Analysebereiches,
- wobei der Träger, während er sich in einer Aufnahmeeinheit befindet, in eine oder mehrere weitere Positionen gebracht wird, in denen Fluidtropfen aufgegeben werden, so daß ein vorgegebenes Raster von Teststellen im Analysebereich erzeugt wird.

Das vorstehend genannte Verfahren ist derart exakt, daß ein Raster von Teststellen erzeugt werden kann, bei dem die Mittelpunkte der Teststellen um weniger als 40 µm von dem vorgegebenen Raster abweichen.

Die weiter oben beschriebene Steuereinheit übernimmt auch die Ansteuerung der Aufnahmeeinheiten, um eine Halterung und Positionierung der Träger in den Aufnahmeeinheiten zu erreichen. Außerdem steuert die Steuereinheit die Transporteinheit, um den Aufnahmeeinheiten in geeigneter zeitlicher Abfolge Träger zuzuführen.

Die vorliegende Erfindung betrifft weiterhin ein Analyseverfahren unter Verwendung erfindungsgemäßer Vielfach-Testelemente mit den Schritten:
- Aufgabe einer Probeflüssigkeit auf den Analysebereich eines Vielfach-Testelements,
- Erfassung eines Bildes des Analysebereiches mit dem darin angeordneten Raster von Teststellen,
- Auswertung der Bereiche des Bildes, in denen sich Teststellen befinden,
- Ermittlung des Vorhandenseins und/oder der Konzentration von einem oder mehreren Analyten.

Bei Verwendung von Teststellen, die mit einem Analyten einer Farbänderung unterliegen, kann die Auswertung des Vielfach-Testelementes über eine einfache optische Untersuchung, beispielsweise mit einem Mikroskop oder einer CCD-Kamera erfolgen. Erfindungsgemäß ist es jedoch bevorzugt, analytische Tests durchzuführen, bei denen durch die Reaktion der Teststellen mit Analyten ein Fluoreszenzsignal entsteht oder verschwindet. Ein derartiges Analyseverfahren ist beispielsweise mit einem Sandwich-Assay möglich, bei dem sich in einer Teststelle ein Antigen befindet, mit dem ein in der Probeflüssigkeit potentiell vorhandener Antikörper nachgewiesen wird. Das Antigen der Teststelle reagiert mit dem Antikörper aus dem Analyten und bildet einen Komplex, an den sich ein weiteres Antigen binden kann, das mit einem Fluoreszenzfarbstoff markiert ist. Das markierte Antigen kann beispielsweise aus einem Reagenz stammen, das der Probeflüssigkeit zuvor zugegeben wurde, oder es kann auch aus einem Teil der Oberfläche des Trägers stammen, wo es zuvor analog einer Teststelle aufgebracht wurde. Das bei einem solchen Sandwich-Assay entstehende Fluoreszenzsignal kann ebenfalls mit einer CCD-Kamera aufgezeichnet werden, die für das emittierte Fluoreszenzlicht empfindlich ist. Weiterhin kann der Analysebereich eines Vielfach-Testlementes mit einem Fluoreszenzmikroskop (siehe EP-A-0 601 714) oder aber einem Fluoreszenzscanner (siehe WO 96/02824) untersucht werden. Mit den beschriebenen Verfahren werden Bilder erhalten, die entweder visuell oder mit Hilfe eines Mikroprozessors ausgewertet werden können.

Die vorliegende Erfindung wird anhand einiger Figuren näher erläutert:
- Figur 1:: Aufsicht auf einen Träger
- Figur 2:: Querschnitt durch einen Träger
- Figur 3:: Ansicht des Trägers von der Unterseite
- Figur 4:: Längsschnitt durch ein Herstellungssystem
- Figur 5:: Querschnitt durch ein Herstellungssystem
- Figur 6:: Aufsicht auf eine Aufnahmeeinheit
- Figur 7:: Transportband mit Haltern
- Figur 8:: Querschnitt durch eine Positioniereinheit
- Figur 9:: Ablaufdiagramm
- Figur 10:: Qualitätssicherungseinheit
- Figur 11:: Vergrößerte Darstellung eines TSH-Nachweises
- Figur 12:: Vergrößerte Darstellung eines Analysebereiches mit 10 verschiedenen Teststellen

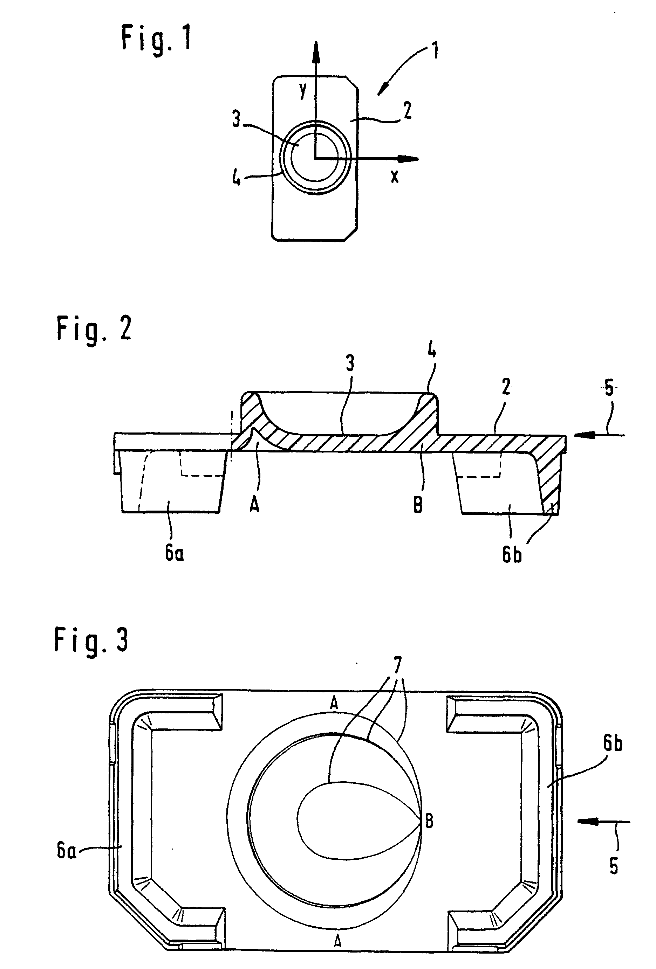

In der Figur 1 ist ein Träger (1) zur Herstellung diagnostischer Vielfach-Testelemente in Aufsicht gezeigt. Der Träger (1) besitzt eine Basisfläche (2) auf der sich ein Analysebereich (3) befindet, der von einem Rand (4) umgeben ist. Analysebereich (3) und Rand (4) bilden zusammen einen Napf, in den Flüssigkeit gegeben werden kann. In Figur 1 ist weiterhin zu erkennen, daß die dargestellte Basisfläche (2) an zwei Kanten abgeschrägt ist. Durch diese Maßnahme kann eine eindeutige Orientierung des Trägers während der Herstellung eines Testelementes bzw. bei einem späteren Einsatz in einem analytischen Verfahren sichergestellt werden. In der Figur 1 sind weiterhin die X- und Y-Achsen eines kartesischen Koordinatensystems angegeben, die eine Fläche definieren, die parallel zur Basisfläche (2) verläuft. Eine Bewegung des Trägers in der XY-Ebene wird im Rahmen dieser Anmeldung als laterale Bewegung bezeichnet. Die Figur 1 ist etwa eine 2fache Vergrößerung eines experimentell erprobten Trägers.

Figur 2 zeigt den Träger der Figur 1 entlang der Y-Achse. Die Figur 2 ist etwa eine 5fache Vergrößerung eines erprobten Trägers. Es ist zu erkennen, daß der planare Analysebereich (3) über eine Krümmung in den Rand (4) übergeht. Eine derartige Ausgestaltung des Napfes hat sich als vorteilhaft erwiesen, um beim Einsatz des Testelementes Verschleppungen zwischen aufeinanderfolgenden Analyseschritten zu vermeiden. Weiterhin ist die Form günstig, um durch Schütteln oder Bewegung des Trägers in Form von Lissajous-Figuren eine Vermischung von Flüssigkeiten im Napf vornehmen zu können, ohne das ein Herausschwappen oder Verspritzen erfolgt.

In der Figur 2 sind weiterhin die Bereiche A und B gezeigt, die sich voneinander untercheiden, obwohl sie symmetrisch zur X-Achse (siehe Fig. 1) angeordnet sind. Die gewählte Ausgestaltung, bei der der Bereich A unterhalb der einen Seite der Krümmung frei von Kunststoffmaterial ist, während der Bereich B auf der anderen Seite gefüllt ist, ist spritzgusstechnisch von Vorteil. Bei einer bevorzugten Herstellungsweise des Trägers werden Spritzgussformen verwandt, deren Formtrennung auf der Oberseite der Basisfläche (2) erfolgt. Das Einspritzen des Spritzgussmaterials erfolgt von der Seite und auf der Höhe, die durch den Pfeil (5) dargestellt ist. Bei dieser Vorgehensweise in Verbindung mit der beschriebenen Ausgestaltung der Bereiche A und B konnte eine besonders gute Beschaffenheit des Analysebereiches (3) realisiert werden, die durch eine sehr große Planarität und wenige Fehlstellen gekennzeichnet ist.

In der Figur 2 sind weiterhin Stege an der Unterseite des Trägers zu erkennen. Der Steg (6a) ist in der Figur 2 versetzt dargestellt, so daß in diesem Bereich eine seitliche Aufsicht auf den Träger zu erkennen ist. Hingegen ist der Steg (6b) in Form eines Schnittes entlang der Y-Achse dargestellt. Beim Steg (6b) ist zu erkennen, daß er sowohl einen Bereich an der Seite des Trägers als auch einen Bereich auf der Rückseite des Trägers besitzt. Zusammen mit der Darstellung des Steges (6a) wird daher erkennbar, daß der Träger zwei Stege besitzt, die eine U-förmige Gestalt aufweisen. Erfindungsgemäß hat sich diese U-förmige Gestalt als besonders günstig erwiesen. Andererseits können jedoch die Anschlagskanten zur Positionierung in der Lateralen auch durch mehrere Stege realisiert werden, die nicht direkt in einander übergehen, wie dies bei den U-förmigen Stegen der Fall ist. Um einen Träger bereitzustellen, der auf geeignete Art und Weise bevorratet werden kann, sollten die Stege jedoch unterhalb des Napfes eine Aussparung in X-Richtung freilassen. Derartige Träger können übereinandergestapelt und durch Verschiebung in X-Richtung vereinzelt werden.

In der Figur 3 ist eine Ansicht des Trägers von der Unterseite gezeigt. Es sind in dieser Darstellung die U-förmigen Stege zu erkennen, deren Form durch die Abschrägungen des Trägers leicht von der idealen U-Form abweicht. Weiterhin sind in der Figur 3 Materialerhebungen (7) auf der Unterseite der Basisfläche (2) zu erkennen. Die Materialerhebungen besitzen mehr oder minder Kreisform und treffen sich in Punkt B, der dem Bereich B der Figur 2 entspricht. Die Materialerhebungen (7) resultieren aus entsprechenden Nuten im Spritzgusswerkzeug. Eine derartige Formgebung des Spritzgusswerkzeuges hat sich als vorteilhaft erwiesen, um die Strömung des Spritzgussmaterials dahingehend zu steuern, daß ein äußerst planarer und homogener Analysebereich erhalten wird. Durch eine Zusammenschau der Figuren 2 und 3 ist erkennbar, daß der Bereich A, der nicht mit Spritzgussmaterial aufgefüllt ist, einen großen Teil des Randes (4) einnimmt und kontinuierlich in den gefüllten Bereich B übergeht.

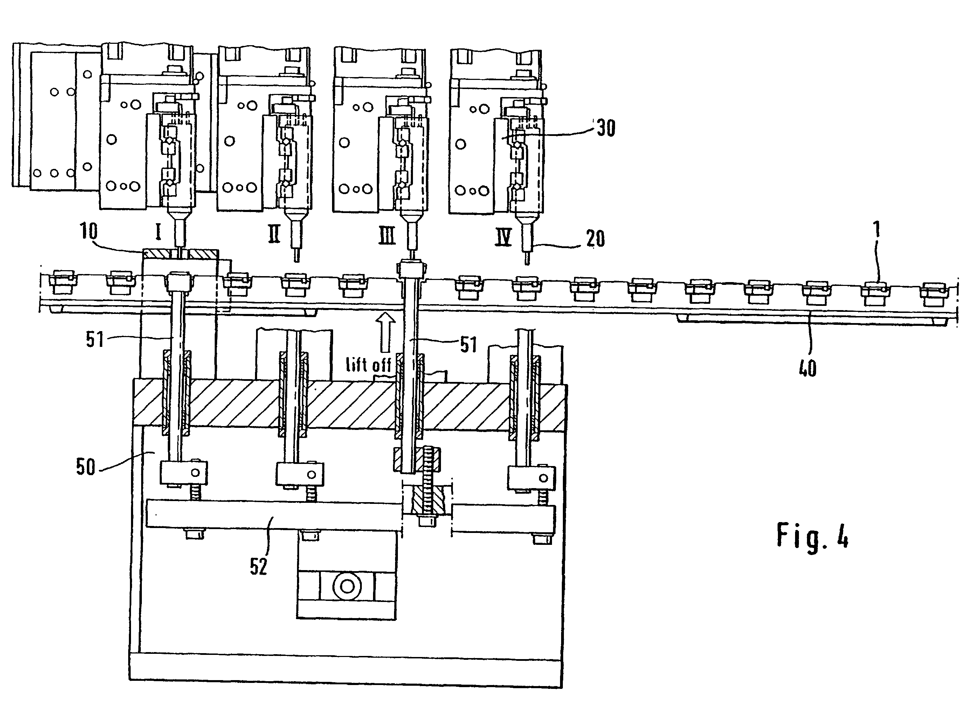

In der Figur 4 ist ein Längsschnitt durch ein erfindungsgemäßes Herstellsystem gezeigt. Die vier aufeinanderfolgenden Stationen zur Beschichtung von Trägern sind mit römischen Ziffern gekennzeichnet. Für die Station I ist schematisch eine Aufnahmeeinheit (10) dargestellt. In der Figur 4 sind weiterhin die den Stationen zugeordneten Druckköpfe (20) dargestellt. Jeder der Druckköpfe ist ortsfest gehaltert und wird während des Druckprozesses nicht verfahren. Weiterhin befindet sich jeder Druckköpfe in einer Justiervorrichtung (30), die eine Justierung vornehmen kann, wenn sich herausstellen sollte, daß die durch den zugehörigen Druckkopf aufgebrachten Teststellen vom vorgegebenen Raster abweichen. Der Aufbau derartiger Justiervorrichtungen ist im Stand der Technik hinlänglich bekannt und wird daher an dieser Stelle nicht näher ausgeführt.

Aus der Figur 4 ist insbesondere die Funktionsweise einer erfindungsgemäß bevorzugten Transporteinheit erkennbar. Die gezeigte Transporteinheit besitzt eine Fördervorrichtung (40), sowie eine Hebevorrichtung (50). Die gezeigte Fördervorrichtung (40) besteht aus einem Transportband, auf dem sich die Träger (1) befinden und in Längsrichtung des Transportbandes, d. h. von Station I in Richtung auf Station IV, transportiert werden. Der Transport erfolgt intermittierend in der Weise, daß in aufeinanderfolgenden Phasen jeweils Träger unterhalb der Druckköpfe angeordnet sind. Aus dieser Position heraus werden die Träger durch die Hebevorrichtung (50) vom Transportband abgehoben und unter einem Druckkopf positioniert. Hierzu besitzt die Hebevorrichtung Stößel (51), die über einen Exzenterantrieb (52) verschoben werden können. Die Ruheposition der Stößel (51) ist für die Station I dargestellt. Die aktivierte Position, in der der Träger bedruckt wird, ist exemplarisch für die Station III dargestellt.

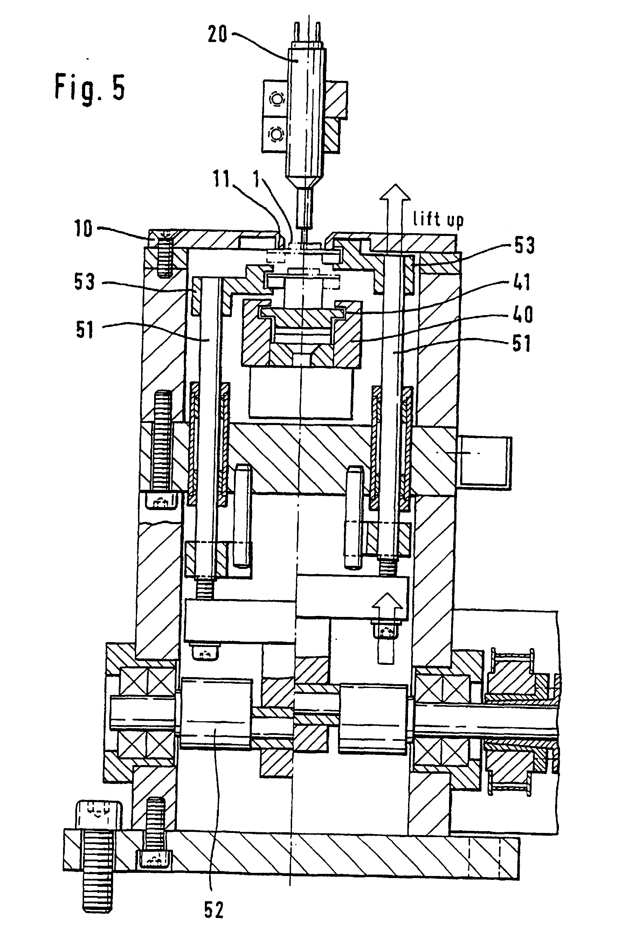

Figur 5 zeigt einen Querschnitt durch ein Herstellungssystem für Vielfach- Testelemente. Die Figur 5 ist bezüglich der gestrichelt dargestellten Hochachse getrennt und rechter und linker Teil sind zu unterschiedlichen Zeitpunkten dargestellt. In der linken Teilhälfte der Figur 5 ist der Stößel (51) in seiner Ruheposition dargestellt. Der Stößel trägt an seiner oberen Seite einen Greifer (53), der einen Träger (1) lose umfaßt. Wird der Stößel (51) durch den Exzenterantrieb (52) angehoben, so greift der Greifer (53) unter den Träger und führt ihn in die Positioniereinheit (10). In der Figur 5 ist die Aufnahmeeinheit (10) lediglich schematisch dargestellt. Es ist jedoch zu erkennen, daß die Aufhahmeeinheit (10) vertikale Anschlagsflächen (11) besitzt, gegen die der Träger mit der Oberseite seiner Basisfläche durch die Greifer (53) gedrückt wird. Eine exakte Relativbewegung von Druckkopf und Aufnahmeeinheit sowie einen exakte vertikale Positionierung des Trägers in der Aufnahmeeinheit ermöglicht es, den Abstand zwischen Träger bzw. dem Analysebereich des Trägers und dem Druckkopf sehr exakt einzustellen. Dies ist notwendig, wenn besonders geringe Abstände zwischen Druckkopf und Analysebereich realisiert werden sollen, da Positionierungenauigkeiten zu einem Zusammenstoß von Druckkopfdüse und Analysebereich führen würden.

In der Figur 5 ist weiterhin die Fördervorrichtung (40) im Querschnitt zu sehen. Die Halter (41) auf denen sich die Träger befinden sind seitlich durch U-förmige Führungsschienen gehaltert, um ein Abkippen zu vermeiden.

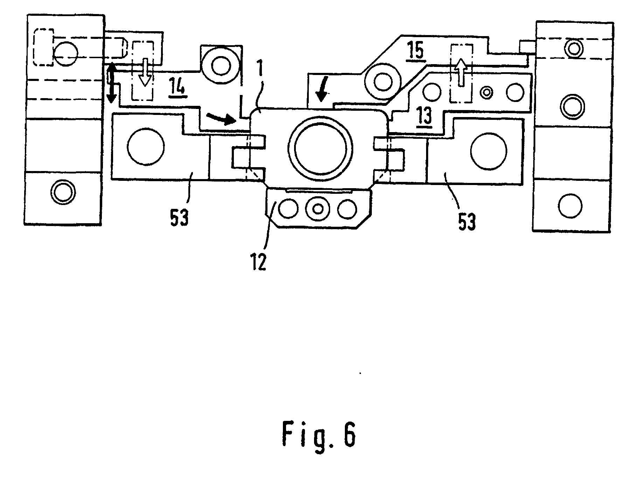

In der Figur 6 ist eine Aufsicht auf eine Aufnahmeeinheit für Träger dargestellt. Der in der Aufnahmeeinheit befindliche Träger (1) wird durch die Greifer (53) von der Unterseite gegen einen vertikalen Anschlag (nicht dargestellt) gedrückt. Dies ist bereits im Zusammenhang mit der Figur 5 erläutert worden. In der Aufnahmeeinheit wird der Träger weiterhin gegen einen X-Anschlag (12) und einen Y-Anschlag (13) gedrückt. Dies erfolgt über einen ersten Hebel (14), der den Träger gegen den gegenüberliegenden Y-Anschlag (13) drückt, sowie einen zweiten Hebel (15), der den Träger gegen den X-Anschlag (12) drückt. Erster und zweiter Hebel sind jeweils drehbar um eine Achse gelagert und werden durch Stößel in die durch weiße offene Pfeile dargestellten Richtungen gedreht. Mit der dargestellten Aufnahmeeinheit ist eine äußerst exakte Positionierung der Träger in den drei Raumrichtungen möglich, was durch ein geeignetes Zusammenwirken von trägerseitigen Stegen und aufnahmeseitigen Positioniervorrichtungen erreicht wird. Bezüglich der trägerseitigen Stege ist es insbesondere von Bedeutung, daß sich jeweils Stege bzw. Teile von Stegen auf gegenüberliegenden Seiten des Trägers befinden, so daß ein Andruck mit einem Hebel auf den einen Steg eine Positionierung des Trägers an dem gegenüberliegenden Steg bewirkt.

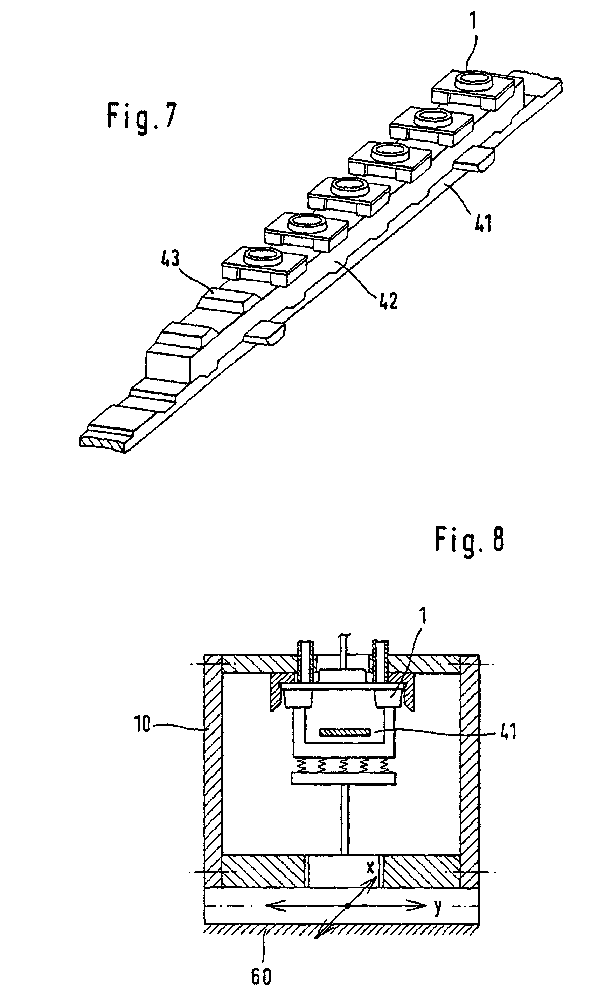

Figur 7 zeigt ein Transportband, daß zu einer Fördervorrichtung gehört. Das Transportband (41) ist flexibel, so daß es über Umlenkrollen geführt werden kann. Auf dem Transportband befindet sich eine Haltereinheit, auf der mehrere Träger transportiert werden können. Die dargestellte Haltereinheit (42) besitzt acht Sockel (43), die nach oben über die Haltereinheit überstehen und der Form der Träger so angepaßt sind, daß die Träger von den Sockeln gehaltert werden. Vorteilhaft ist die Haltereinheit (42) so ausgeführt, daß die Träger, wenn sie sich auf den Sockeln befinden, seitlich überstehen. Auf diese Weise können die Träger wie im Zusammenhang mit den Figuren 4 und 5 beschrieben, auf einfache Weise angehoben und in die Aufnahmeeinheit befördert werden.

Figur 8 zeigt eine schematische Querschnittsdarstellung durch eine Positioniereinheit. Die Positioniereinheit umfaßt eine Grundplatte (60), die ortsfest angeordnet ist.

Gegenüber dieser Grundplatte wird die Aufnahmeeinheit (10) lateral verschoben. Die Aufnahmeeinheit ist in der Figur 8 lediglich schematisch dargestellt. Weiterhin ist in der Figur 8 lediglich durch Pfeile in X- und Y-Richtung angedeutet, in welchen Richtungen die Aufnahmeeinheit verschoben wird. Vorrichtungen zur exakten Verschiebung und Positionierung in X- und Y-Richtung sind im Stand der Technik hinlänglich bekannt und werden daher an dieser Stelle nicht näher erläutert.

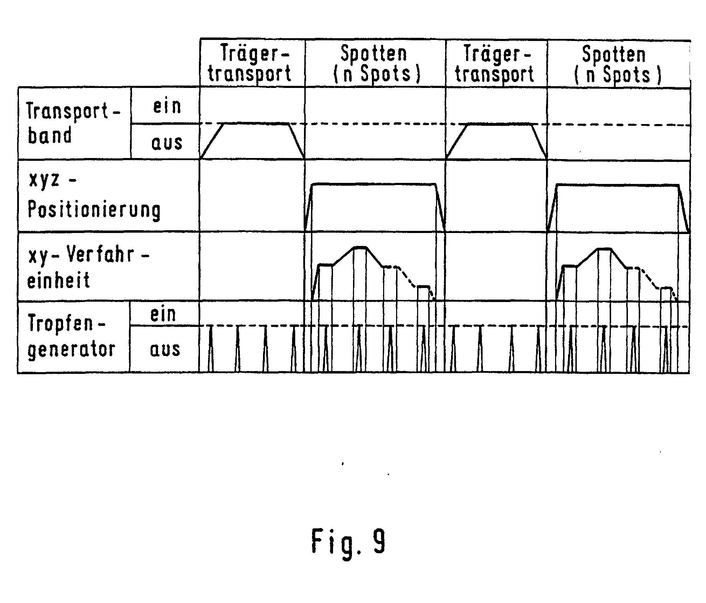

Die Figur 9 zeigt ein Ablaufdiagramm, aus dem zu entnehmen ist, wie die zeitliche Koordinierung der einzelnen Komponenten des Herstellsystems erfolgt. Zunächst wird das Transportband eingeschaltet und der Träger unter einen ersten Druckkopf positioniert (bezeichnet als Trägertransport). In einem zweiten Schritt wird der Träger in der Aufnahmeeinheit positioniert und mit der Positioniereinheit (in der Figur bezeichnet als XY-Verfahreinheit) so positioniert, daß definierte Stellen des Trägers unterhalb des Druckkopfes angeordnet sind. Sobald die Positionierung einer Stelle unter dem Druckkopf erfolgt ist, wird ein Tropfen Durckflüssigkeit auf den Träger abgegeben (der Druckkopf wird in der Figur 9 als Tropfengenerator bezeichnet). Auf diesen Schritt folgend wird der Träger unter einem neuen Druckkopf positioniert und hier wie vorstehend beschrieben erneut ein oder mehrere Druckvorgänge vorgenommen.

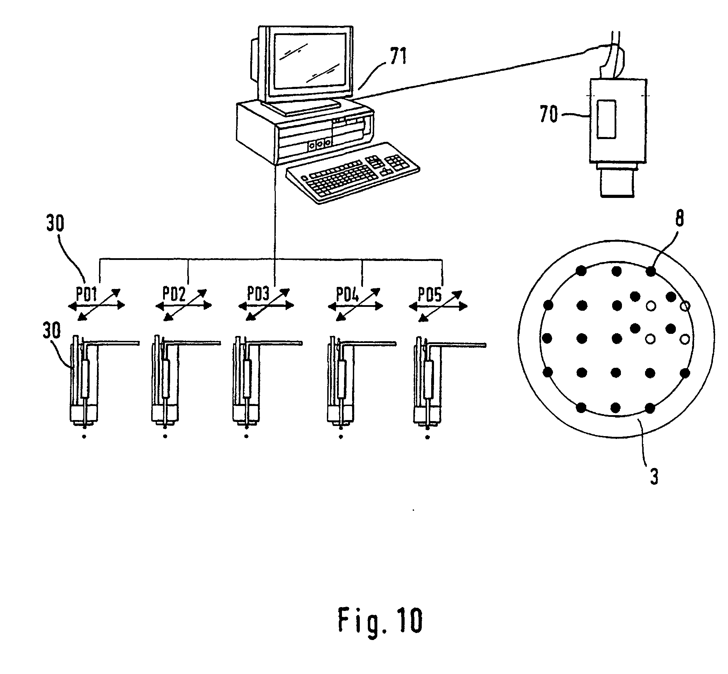

Die Figur 10 zeigt eine Qualitätssicherungseinheit, mit der eine Justierung der Druckköpfe vorgenommen wird. In der Figur ist stark vergrößert der Analysebereich (3) eines Trägers dargestellt. Wie zu erkennen ist, befinden sich einige der aufgetragenen Teststellen (8) außerhalb der vorgesehenen Positionen (helle Kreise) des Rasters. Der Analysebereich des Testelementes wird mit einer CCD-Kamera (70) aufgenommen und die erhaltenen Informationen an einen Rechner (71) weitergegeben. Der Rechner nimmt eine Bildauswertung vor, erkennt die Punkte, die vom Raster abweichen ordnet sie dem Druckkopf zu, durch den sie verursacht wurden und steuert diesen Druckkopf entsprechend an, um eine Abweichung vom Raster bei späteren Testelementen zu vermeiden.

Die Herstellung von erfindungsgemäßen Vielfach-Testelementen wird im Folgenden anhand von Beispielen näher erläutert:

### Beispiel 1:

Ein Träger gemäß den Figuren 1-3 wurde mit einer Apparatur gemäß den Figuren 4-6 mit Teststellen bedruckt. Vor dem Druckprozeß wurde der Analysebereich des Trägers mit einem Antikörper gegen IgG gleichmäßig beschichtet, so daß die Unebenheit der erhaltenen Oberfläche kleiner als 10 µM ist und der Grenzwinkel bezogen auf eine 20 mM Kaliumphosphatlösung 90° beträgt. Der Träger wurde nachfolgend mit einer Druckflüssigkeit bedruckt, in der sich ein monoklonaler Antikörper gegen das tyroidstimmulierende Hormon (TSH) befindet, welches ein IgG ist. Es wurde eine Lösung von 1,0 mg/ml des Antikörpers mit 20 mM Kaliumphosphatlösung verdünnt, bis sich ein pH-Wert von 7,4 einstellt und die erhaltene Lösung mit einem Filter von 0,02 µm Porenweite filtriert. Nachfolgend wurde die Lösung durch zehnminütiges Schütteln bei 35°C und 200-300 mbar Vakuum entgast.

Die erhaltene Drucklösung wurde mit einem Druckkopf ADK-201b der Firma Microdrop (Hamburg) auf den Analysebereich des Testelementes aufgedruckt. Im Reservoir der Druckflüssigkeit wurde zunächst ein Druck angelegt, der 20 mbar unterhalb des Umgebungsdruckes liegt und der Druckkopf wurde mit einer Spannung von 68 V bei einer Frequenz von 0,5 Hz und einer Impulsbreite von 115 ms betrieben. Die hierdurch erhaltene Tröpfchengröße betrug während des Fluges 55 µm und die damit erzielte Teststellengröße betrug 95 µm im Durchmesser.

Nach dem Druckvorgang wurde der Träger für 20 Sekunden inkubiert und dann mit den folgenden Lösungen gespült:
20 mM Kaliumphosphatlösung mit pH 7,7
0,9% Natriumchlorid
2% Saccharose
0,01% Natrium-Azid
1% Rinderserum Albumin.

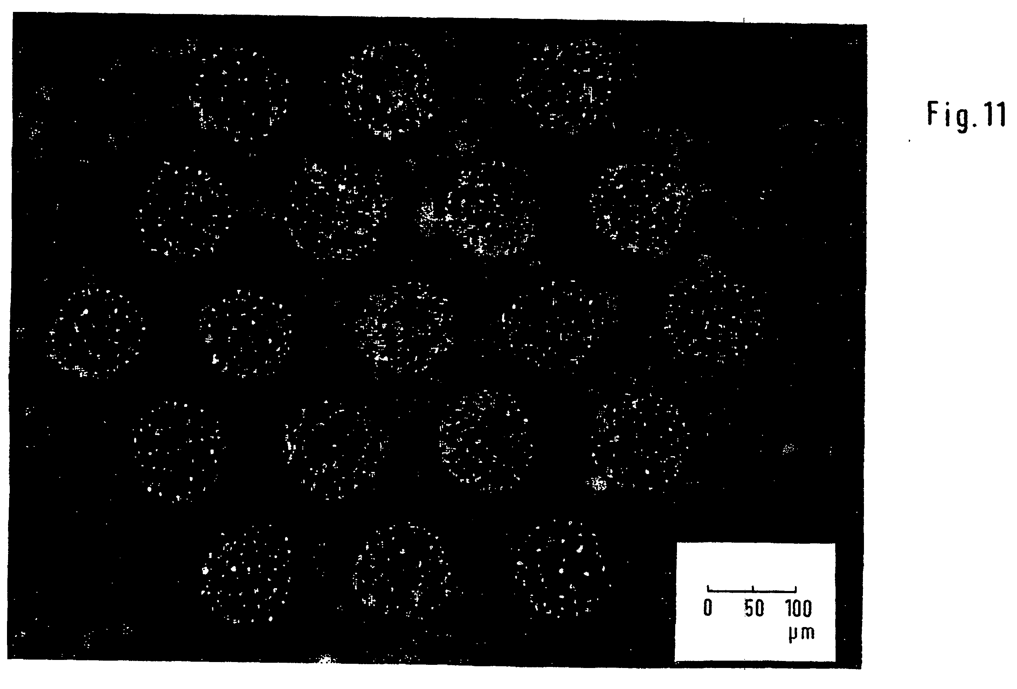

Zur Durchführung einer Analyse auf TSH wurden 50 µl TSH-haltige Probe in den Napf des Testelementes gegeben und 10 Minuten inkubiert. Nachfolgend wurde die Probe durch Waschen entfernt und darauf 50 µl eines Konjugates aus einem Antikörper gegen TSH mit einem Antikörper gegen Digoxin zugegeben und für 10 Minuten inkubiert. Nach weiterem Waschen wurden 50 µl eines Konjugates aus Digoxin, gebunden an Mikropartikel, zugegeben, in denen sich ein Fluoreszenzfarbstoff befindet. Nach einem weiteren Waschprozeß wurde das Testlement mit einem Fluoreszenzmikroskop aufgenommen, was zu Figur 11 führte.

Figur 11 zeigt die stark vergrößerte Darstellung eines Analysebereiches mit 19 Teststellen. Die Vergrößerung des dargestellten Musters ist etwa 200fach und es ist die strenge regelmäßige Anordnung der einzelnen Teststellen zu erkennen. Jede der Teststellen besitzt eine granuläre Gestalt, die durch einzelne mit Fluoreszenzfarbstoff angereicherte fluoreszierende Mikropartikel hervorgerufen wird. Trotz der statistischen Verteilung der Mikropartikel über die Teststellen ist zu erkennen, daß die einzelnen Teststellen eine klar umrissene Gestalt aufweisen und sehr regelmäßig im vorgegebenen Raster angeordnet sind.

### Beispiel 2:

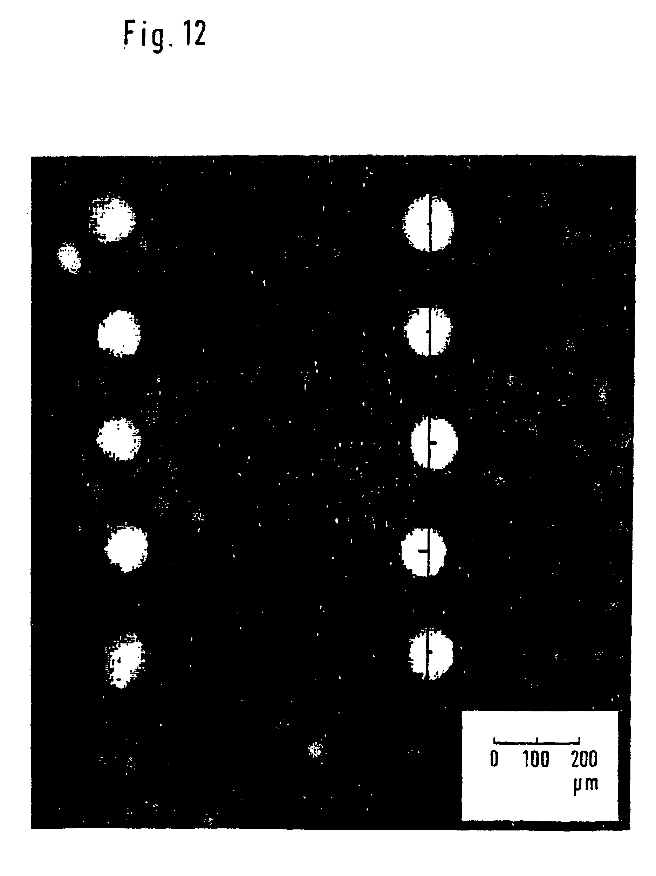

In einem weiteren Experiment wurde ein Träger mit 10 verschiedenen Antikörpern bedruckt. Hierzu wurde wiederum ein Träger verwendet, dessen Analysefläche mit einem IgG-Antikörper beschichtet ist und an den Antikörper gegen verschiedene Analyten gebunden wurden. Im Gegensatz zum Beispiel 1 wurden zur Detektion jedoch Antikörper verwendet, die mit Resorufin gelabelt sind, welches direkt mit einem Fluoreszenzphotometer nachgewiesen werden kann. Die Figur 12 zeigt das Bild eines Analysebereiches, das mit einem Fluoreszenzphotometer auf Basis der vom Resurofin erhaltenen Fluoreszenz gewonnen wurde. In der linken Reihe der Figur 12 befinden sich von oben nach unten die folgenden Antikörper:
eine Mischung verschiedener Antikörper gegen Hepatitis-C-Virus
Antikörper gegen HCV-NS4/3
Antikörper gegen HCV-Helicase
Antikörper gegen HCV-Core
Antikörper gegen HB-Core

In der rechten Reihe von oben nach unten:
Antikörper gegen HIV/P24
Antikörper gegen HIV/GP41P1
Antikörper gegen HIV/GP41P2
Antikörper gegen HIV-Mix
Antikörper gegen HBsAG

Aus der Figur 12 ist zu erkennen, daß trotz der Bedruckung des Testträgers mit 10 verschiedenen Druckköpfen eine sehr genaue Anordnung erreicht werden konnte. Um dies zu verdeutlichen wurde durch die recht Reihe von Teststellen eine Ausgleichsgerade gezogen und die Abweichung der Teststellen von dieser Ausgleichsgeraden ermittelt, indem der Mittelpunkt des jeweiligen Testelementes auf dem kürzesten Weg mit der Ausgleichsgeraden verbunden wurde. Die Länge dieser Verbindungslinien ergibt direkt die Abweichung der Teststellen vom vorgegebenen Raster. Die stärkste Abweichung vom Raster zeigt die zweitunterste Teststelle. Jedoch ist die Abweichung kleiner als 25 µm.

### Bezugszeichenliste

(1) Träger
(2) Basisfläche
(3) Analysebereich
(4) Rand
(5) Anspritzrichtung
(6) Stege
(7) Materialerhebungen
(8) Teststelle
(10) Aufnahmeeinheit
(11) vertikale Anschlagsfläche
(12) X-Anschlag
(13) Y-Anschlag
(14) erster Hebel
(15) zweiter Hebel
(20) Druckkopf
(30) Justiervorrichtung
(40) Fördervorrichtung
(41) Transportband
(42) Halteeinheit
(43) Sockel
(50) Hebevorrichtung
(51) Stößel
(52) Exzenterantrieb
(53) Greifer
(60) Grundplatte
(70) CCD-Kamera
(71) Rechner

## Patentansprüche

1. System zur Herstellung diagnostischer Vielfach-Testelemente beinhaltend,
a) einen Träger (1) mit einem Analysebereich (3) zur Aufbringung diagnostischer Teststellen, sowie mit einer oder mehreren Anschlagskanten pro Raumrichtung zur Positionierung des Trägers,
b) eine erste Aufnahmeeinheit 10) in die der Träger eingebracht und in der er über die ein oder mehreren Anschlagskanten positioniert wird,
c) einen ersten Druckkopf (20 I), der oberhalb der Aufnahmeeinheit (10) angeordnet ist und der zur Abgabe von Fluidtropfen einer ersten Flüssigkeit auf den Analysebereich des Trägers dient,
d) eine erste Positioniereinheit, die die erste Aufnahmeeinheit lateral verschiebt und positioniert,
e) eine zweite Aufnahmeeinheit in die der Träger eingebracht und in der er über die ein oder mehreren Anschlagskanten positioniert wird,
f) einen zweiten Druckkopf (20 II), der oberhalb der zweiten Aufnahmeeinheit angeordnet ist und der zur Abgabe von Fluidtropfen einer zweiten Flüssigkeit auf den Analysebereich des Trägers dient,
g) eine zweite Positioniereinheit, die die zweite Aufnahmeeinheit lateral verschiebt und positioniert,
h) eine Transporteinheit (40, 50), die den Träger in die Aufnahmeeinheiten transportiert,
i) eine Steuereinheit (71), die die Transporteinheit, die Aufnahmeeinheiten und die Positioniereinheiten sowie die Fluidabgabe aus den Druckköpfen steuert.

2. System gemäß Anspruch 1, **dadurch gekennzeichnet, daß** die Druckköpfe zur Abgabe der Fluide auf den Träger lateral nicht verfahren werden.

3. System gemäß Anspruch 1 oder 2, **dadurch gekennzeichnet, daß** die Steuereinheit aufeinander abgestimmte Bewegungen der Aufnahmeeinheiten und Abgabe von Fluid aus den Druckköpfen so steuert, daß ein vorgegebenes Raster von Teststellen auf den Analysebereich eines Testelementes aufgebracht wird.

4. System gemäß Anspruch 1, **dadurch gekennzeichnet, daß** die Positioniergenauigkeit des Trägers in den Aufnahmeeinheiten und die Positionierung der Druckköpfe derart genau ist, daß die einzelnen Teststellen um weniger als 40 µm vom vorgegebenen Raster abweichen.

5. System gemäß. Anspruch 4, **dadurch gekennzeichnet, daß** die Abweichung vom Raster kleiner als 25 µm ist.

6. System gemäß Anspruch 1, **dadurch gekennzeichnet, daß** die Transporteinheit sowohl eine Fördervorrichtung (40) als auch eine Hebevorrichtung (50) beinhaltet.

7. System gemäß Anspruch 6, **dadurch gekennzeichnet, daß** die Fördervorrichtung ein Förderband beinhaltet, auf dem sich Halter zur Halterung von Trägern befinden.

8. System gemäß Anspruch 7, **dadurch gekennzeichnet, daß** die Träger eine Basisfläche besitzen, an deren Unterseite sich ein oder mehr Stege befinden, die an den Seiten der Halter zu liegen kommen, wenn sich die Träger auf den Haltern befinden und die Stege ein Herabrutschen der Träger von den Haltern verhindern.

9. System gemäß Anspruch 7, **dadurch gekennzeichnet, daß** die Träger an zwei gegenüberliegenden Seiten über die Halter überstehen.

10. System gemäß Anspruch 6 oder 9, **dadurch gekennzeichnet, daß** die Hebevorrichtung von der Unterseite der Träger angreift und eine Anhebung der Träger in die Aufnahmeeinheit hinein vornimmt.

11. System gemäß Anspruch 1, **dadurch gekennzeichnet, daß** die Aufnahmeeinheiten von der Unterseite mit Trägern beschickt werden.

12. System gemäß Anspruch 11, **dadurch gekennzeichnet, daß** die Aufnahmeeinheiten Anschlagselemente besitzen, gegen die der Träger von unten gedrückt und in der Vertikalen positioniert wird.

13. System gemäß Anspruch 1, **dadurch gekennzeichnet, daß** die Druckköpfe in Justiervorrichtungen (30) gehaltert sind, die eine laterale Justierung der Druckköpfe ermöglichen.

14. System gemäß Anspruch 13, **dadurch gekennzeichnet, daß** das System eine oder mehrere Qualitätssicherungsvorrichtungen aufweist, die eine optische Untersuchung des Rasters vornehmen und Abweichungen vom vorgegebenen Raster in Signale umwandeln, die eine Justierung der Druckkopfpositionen über die Justiervorrichtungen steuern.

15. System gemäß Anspruch 14, **dadurch gekennzeichnet, daß** die optische Untersuchung mit einer oder mehreren CCD-Kameras (70) erfolgt.

16. System gemäß Anspruch 15, **dadurch gekennzeichnet, daß** erste und/oder zweite Flüssigkeit ein oder mehrere fluoreszierende Farbstoffe enthalten und die Position der Teststellen über einen Fluoreszenzscanner ermittelt wird.

17. System gemäß Anspruch 1, **dadurch gekennzeichnet, daß** das gesamte System oder Teile des Systems, durch ein Gehäuse gegenüber der Umgebung abgeschlossen sind, in dem eine vorgegebene Luftfeuchte eingestellt wird.

18. Herstellverfahren für ein diagnostisches Vielfach-Testelement, bei dem mit den folgenden Schritten auf einen Träger (1) ein Raster von Teststellen aufgebracht wird:
a) Positionierung des Trägers in einer ersten Aufnahmeeinheit (10) unterhalb eines ersten Druckkopfes (20 I),
b) Verschieben der ersten Aufnahmeeinheit (10) und des darin positionierten Trägers mit einer Positioniereinheit in eine Position, in der eine erste Stelle eines Analysebereiches des Vielfach-Testelementes unterhalb des ersten Druckkopfes positioniert ist,
c) Abgabe eines oder mehrerer Fluidtropfen aus dem ersten Druckkopf auf die erste Stelle des Analysebereiches,
d) Positionierung des Trägers in einer zweiten Aufnahmeeinheit unterhalb eines zweiten Druckkopfes (20 II),
e) Verschieben der zweiten Aufnahmeeinheit und des darin positionierten Trägers mit einer Positioniereinheit in eine Position, in der eine zweite Stelle des Analysebereiches unterhalb des zweiten Druckkopfes positioniert ist,
f) Abgabe eines oder mehrerer Fluidtropfen aus dem zweiten Druckkopf auf die zweite Stelle des Analysebereiches,
wobei die Schritte a) bis c) und d) bis f) mit den genannten oder weiteren Druckköpfen wiederholt werden, so daß ein vorgegebenes Raster von Teststellen im Analysebereich erzeugt wird.

19. Herstellverfahren gemäß Anspruch 18, **dadurch gekennzeichnet, daß** die Mittelpunkte der Teststellen um weniger als 40 µm von dem vorgegebenen Raster abweichen.

20. Herstellverfahren gemäß Anspruch 18, **dadurch gekennzeichnet, daß** der Träger von unten in die Aufnahmeeinheiten eingeführt wird.

21. Herstellverfahren gemäß Anspruch 18, **dadurch gekennzeichnet, daß** das Raster optisch kontrolliert wird und bei Abweichung von Teststellen vom vorgegebenen Raster eine Justierung der Druckköpfe über Justiervorrichtungen (30) vorgenommen wird.

22. Herstellverfahren gemäß Anspruch 18, **dadurch gekennzeichnet, daß** die Träger mit einer Transportvorrichtung zwischen den Aufnahmeeinheiten bewegt werden.

23. Herstellverfahren gemäß Anspruch 18, **dadurch gekennzeichnet, daß** die aus den Druckköpfen austretenden Fluidtropfen eine Geschwindigkeit von weniger als 5 m/s, vorzugsweise weniger als 2 m/s aufweisen und beim Druckvorgang der Abstand der Druckkopfdüsen vom Analysebereich auf weniger als 2 mm, vorzugsweise 500 µm oder weniger eingestellt wird.

24. Herstellverfahren gemäß Anspruch 23, **dadurch gekennzeichnet, daß** das Volumen eines einzelnen Fluidtropfens kleiner als 1000 pl ist.

## Claims

1. System for producing multiple diagnostic test elements comprising,
a) a support (1) with an analytical region (3) for applying diagnostic test spots and one or several stop edges for each direction in space to position the support,
b) a first holding unit (10) into which the support is inserted and positioned by means of one or several stop edges,
c) a first printing head (20 I) which is arranged above the holding unit (10) and which is used to release fluid drops of a first liquid onto the analytical region of the support,
d) a first positioning unit which laterally displaces and positions the first holding unit,
e) a second holding unit into which the support is inserted and positioned by means of one or several stop edges,
f) a second printing head (20 II) which is arranged above the second holding unit and is used to release fluid drops of a second liquid onto the analytical region of the support,
g) a second positioning unit which laterally displaces and positions the second holding unit,
h) a transport unit (40, 50) which transports the support into the holding units,
i) a control unit (71) which controls the transport unit, the holding units and the positioning units and the release of liquid from the printing heads.

2. System as claimed in claim 1, wherein the printing heads are not moved laterally in order to release the fluids onto the support.

3. System as claimed in claim 1 or 2, wherein the control unit controls coordinated movements of the holding units and the release of fluid from the printing heads in such a way that a specified pattern of test spots is applied to the analytical region of a test element.

4. System as claimed in claim 1, wherein the positioning accuracy of the support in the holding units and the positioning of the printing heads is so accurate that the individual test spots differ by less than 40 µm from the specified pattern.

5. System as claimed in claim 4, wherein the deviation from the pattern is less than 25 µm.

6. System as claimed in claim 1, wherein the transport unit comprises a conveyer device (40) as well as a lifting device (50).

7. System as claimed in claim 6, wherein the conveyer device comprises a conveyer belt on which holders for holding supports are located.

8. System as claimed in claim 7, wherein the supports have a basal surface on the underside of which one or several cross-pieces are located which rest against the sides of the holder when the supports are located on the holders and the cross-pieces prevent the supports from sliding from the holders.

9. System as claimed in claim 1, wherein the supports protrude over the holders on two opposite sides.

10. System as claimed in claim 6 or 9, wherein the lifting device grips the underside of the support and lifts the support into the holding unit.

11. System as claimed in claim 1, wherein the holding units are loaded with supports from below.

12. System as claimed in claim 11, wherein the holding units have stop elements against which the support is pressed from below and is vertically positioned.

13. System as claimed in claim 1, wherein the printing heads are held in adjusting devices (30) which enable a lateral adjustment of the printing heads.

14. System as claimed in claim 13, wherein the system has one or several quality assurance devices which optically examine the pattern and convert deviations from the specified pattern into signals which control an adjustment of the printing head positions by means of the adjusting devices.

15. System as claimed in claim 14, wherein the optical examination is carried out with one or several CCD cameras (70).

16. System as claimed in claim 15, wherein the first and/or second liquid contains one or several fluorescent dyes and the position of the test spots is determined by a fluorescent scanner.

17. System as claimed in claim 1, wherein the entire system or parts of the system are closed from the environment by a housing in which a specified air humidity is adjusted.

18. Production process for a multiple diagnostic test element in which a pattern of test spots is applied to a support (1) comprising the following steps:
a) positioning a support in a first holding unit (10) below a first printing head (20 I),
b) moving the first holding unit (10) and the support positioned therein with a positioning unit into a position in which a first site of the analytical region is positioned below the first printing head,
c) release of one or several liquid drops from the first printing head onto the first site of the analytical region,
d) positioning the support in a second holding unit below a second printing head (20 II),
e) moving the second holding unit and the support positioned therein with a positioning unit into a position in which a second site of the analytical region is positioned below the second printing head,
f) release of one or several liquid drops from the second printing head onto the second site of the analytical region,
wherein steps a) to c) and d) to f) are repeated with the said printing head or with other printing heads so that a specified pattern of test spots is generated in the analytical region.

19. Production process as claimed in claim 18, wherein the centres of the test spots deviate by less than 40 µm from the specified pattern.

20. Production process as claimed in claim 18, wherein the support is inserted from below into the holding units.

21. Production process as claimed in claim 18, wherein the pattern is monitored optically and when the test spots deviate from the specified pattern the printing heads are adjusted by adjusting devices (30).

22. Production process as claimed in claim 18, wherein the supports are moved between the holding units with a transport device.

23. Production process as claimed in claim 18, wherein the liquid drops emerging from the printing heads have a speed of less than 5 m/s, preferably of less than 2 m/s and the distance of the printing head nozzles from the analytical region is less than 2 mm, preferably 500 µm or less during the printing process.

24. Production process as claimed in claim 23, wherein the volume of an individual liquid drop is less than 1000 pl.

## Revendications

1. Système de fabrication d'éléments multiples pour tests de diagnostic, comprenant
a) un support (1) avec une zone d'analyse (3) destinée à l'application de points de test diagnostic ainsi qu'avec un ou plusieurs bords d'arrêt par direction spatiale pour positionner le support,
b) une première unité de réception (10) dans laquelle le support est introduit et dans laquelle il est positionné à l'aide dudit un ou desdits plusieurs bords d'arrêt,
c) une première tête d'impression (20 I) qui est disposée au-dessus de l'unité de réception (10) et qui sert à distribuer des gouttes fluides d'un premier liquide sur la zone d'analyse du support,
d) une première unité de positionnement qui déplace latéralement la première unité de réception et la positionne,
e) une seconde unité de réception dans laquelle le support est introduit et dans laquelle il est positionné à l'aide dudit un ou desdits plusieurs bords d'arrêt,
f) une seconde tête d'impression (20 II) qui est disposée au-dessus de la seconde unité de réception et qui sert à distribuer des gouttes fluides d'un second liquide sur la zone d'analyse du support,
g) une seconde unité de positionnement qui déplace latéralement la seconde unité de réception et la positionne,
h) une unité de transport (40, 50) qui transporte le support dans les unités de réception,
i) une unité de commande (71) qui commande l'unité de transport, les unités de réception et les unités de positionnement ainsi que la distribution des fluides sortant des têtes de pression.

2. Système selon la revendication 1, **caractérisé en ce que** les têtes d'impression pour distribuer les fluides sur le support ne sont pas déplacées latéralement.

3. Système selon la revendication 1 ou 2, **caractérisé en ce que** l'unité de commande commande les mouvements synchronisés des unités de réception et la distribution de fluide sortant des têtes d'impression de manière à appliquer un quadrillage prédéterminé de points de test sur la zone d'analyse d'un élément de test.

4. Système selon la revendication 1, **caractérisé en ce que** la précision de positionnement du support dans les unités de réception et le positionnement des têtes d'impression sont si précis que les différents points de test s'écartent du quadrillage prédéterminé de moins de 40 µm.

5. Système selon la revendication 4, **caractérisé en ce que** l'écart du quadrillage est inférieur à 25 µm.

6. Système selon la revendication 1, **caractérisé en ce que** l'unité de transport comporte à la fois un dispositif de convoyage (40) et un dispositif de levage (50).

7. Système selon la revendication 6, **caractérisé en ce que** le dispositif de convoyage comporte un convoyeur à bande sur lequel se trouvent des fixations pour fixer des supports.

8. Système selon la revendication 7, **caractérisé en ce que** les supports ont une surface de base dont la face inférieure porte un ou plusieurs méplats qui viennent en appui sur les côtés des fixations lorsque les supports se trouvent sur les fixations, et **en ce que** les méplats empêchent le support de glisser sur les fixations et de tomber.

9. Système selon la revendication 7, **caractérisé en ce que** les supports dépassent les fixations sur deux côtés opposés.

10. Système selon la revendication 6 ou 9, **caractérisé en ce que** le dispositif de levage saisit les supports par la face inférieure et place les supports dans l'unité de réception en les soulevant.

11. Système selon la revendication 1, **caractérisé en ce que** les unités de réception sont alimentées en supports par la face inférieure.

12. Système selon la revendication 11, **caractérisé en ce que** les unités de réception possèdent des éléments de butée contre lesquels le support est plaqué par en dessous et positionné à la verticale.

13. Système selon la revendication 1, **caractérisé en ce que** les têtes d'impression sont fixées dans des dispositifs d'ajustage (30) qui permettent un ajustage latéral des têtes d'impression.

14. Système selon la revendication 13, **caractérisé en ce que** le système comprend un ou plusieurs dispositifs d'assurance qualité qui procèdent à un examen optique du quadrillage et transforment les écarts du quadrillage prédéterminé en signaux, lesquels commandent un ajustage de la position des têtes d'impression par l'intermédiaire des dispositifs d'ajustage.

15. Système selon la revendication 14, **caractérisé en ce que** l'examen optique est réalisé avec une ou plusieurs caméras CCD (70).

16. Système selon la revendication 15, **caractérisé en ce que** le premier et/ou le second liquide contiennent un ou plusieurs colorants fluorescents et **en ce que** la position des points de test est déterminée par l'intermédiaire d'un scanner fluorescent.

17. Système selon la revendication 1, **caractérisé en ce que** l'ensemble du système ou des parties du système sont isolées de l'environnement par un boîtier dans lequel on règle une humidité de l'air prédéterminée.

18. Procédé de fabrication d'un élément multiple pour tests de diagnostic, dans lequel un quadrillage de points de test est appliqué sur un support (1) par les étapes suivantes :
a) positionnement du support dans une première unité de réception (10) au-dessous d'une première tête d'impression (20 I),
b) déplacement de la première unité de réception (10) et du support qui y est positionné, à l'aide d'une unité de positionnement, dans une position dans laquelle un premier point d'une zone d'analyse de l'élément de test multiple est positionné au-dessous de la première tête d'impression,
c) distribution d'une ou de plusieurs gouttes fluides sortant de la première tête d'impression sur le premier point de la zone d'analyse,
d) positionnement du support dans une seconde unité de réception au-dessous d'une seconde tête d'impression (20 II),
e) déplacement de la seconde unité de réception et du support qui y est positionné, à l'aide d'une unité de positionnement, dans une position dans laquelle un second point de la zone d'analyse est positionné au-dessous de la seconde tête d'impression,
f) distribution d'une ou de plusieurs gouttes fluides sortant de la seconde tête d'impression sur le second point de la zone d'analyse,
les étapes a) à c) et d) à f) étant répétées avec les têtes d'impression citées ou avec d'autres de manière à obtenir un quadrillage prédéterminé de points de test dans la zone d'analyse.

19. Procédé de fabrication selon la revendication 18, **caractérisé en ce que** les centres des points de test s'écartent du quadrillage prédéterminé de moins de 40 µm.

20. Procédé de fabrication selon la revendication 18, **caractérisé en ce que** le support est introduit par en dessous dans les unités de réception.

21. Procédé de fabrication selon la revendication 18, **caractérisé en ce que** le quadrillage est contrôlé optiquement et qu'en cas d'écart de points de test du quadrillage prédéterminé, il est procédé à un ajustage des têtes d'impression par l'intermédiaire de dispositifs d'ajustage (30).

22. Procédé de fabrication selon la revendication 18, **caractérisé en ce que** les supports sont mus entre les unités de réception à l'aide d'un dispositif de transport.

23. Procédé de fabrication selon la revendication 18, **caractérisé en ce que** les gouttes fluides sortant des têtes d'impression ont une vitesse inférieure à 5 m/s, de préférence inférieure à 2 m/s, et **en ce que** durant l'impression la distance séparant les buses des têtes d'impression de la zone d'analyse est réglée à moins de 2 mm, de préférence 500 µm ou moins.

24. Procédé de fabrication selon la revendication 23, **caractérisé en ce que** le volume d'une goutte fluide individuelle est inférieur à 1000 pl.
